# EUROPÄISCHE PATENTSCHRIFT

(11) **EP 0 964 187 B1**
(45) Veröffentlichungstag und Bekanntmachung des Hinweises auf die Patenterteilung: **10.12.2003**
(21) Anmeldenummer: 99110864.8
(22) Anmeldetag: 07.06.1999
(51) Int. Cl.: F16H 61/22, F16H 59/10

(54) **Schaltvorrichtung für ein Fahrzeuggetriebe mit Verriegelungsmechanismus**
Shift device for a vehicle transmission with locking mechanism
Dispositif de commande de boîte de vitesses de véhicule avec mécanisme de verrouillage

(30) Priorität: 08.06.1998 DE 19825479
(43) Veröffentlichungstag der Anmeldung: 15.12.1999
(73) Patentinhaber: ZF Lemförder Metallwaren AG, 49448 Lemförde (DE)
(72) Erfinder: Ersoy, Metin Dr., 65396 Walluf (DE)

(56) Entgegenhaltungen:
- EP-A- 0 709 597
- DE-A- 4 217 500
- US-A- 5 275 065
- US-A- 5 718 312

## Beschreibung

Die Erfindung betrifft eine Schaltvorrichtung für ein Fahrzeuggetriebe, vorzugsweise ein automatisches Fahrzeuggetriebe mit einem Verriegelungsmechanismus gemäß dem Oberbegriff des Anspruches 1.

Die US 5,275,065 beschreibt eine gattungsbildende Schaltvorrichtung für ein Fahrzeuggetriebe, vorzugsweise ein automatisches Fahrzeuggetriebe, zur elektronischen und/oder mechanischen Anwahl der Schaltstufen mit einem um mindestens eine Schwenkachse schwenkbaren Schalthebel und einem Verriegelungsmechanismus für den Schalthebel, wobei der Verriegelungsmechanismus aus einer um eine Kippachse schwenkbaren Sperrplatte besteht, die mit Hilfe einer parallel zum Schalthebel verlaufenden und axial bewegbaren Entriegelungsstange betätigt wird. An einer Kulisse wird ein Sperrstift, welcher an der Entriegelungsstange befestigt ist, bewegt. Der Sperrstift kann den Schalthebel in einer Position sperren, sobald der Sperrstift in dieser Position in die Kulisse eingreift. Die Lösung nach der US 5,275,065 beinhaltet ferner einem Permanentmagneten, der die Sperrplatte mittelbar in der Verriegelungsposition hält, sowie einen der Haltewirkung des Permanentmagneten entgegenwirkenden Elektromagnet, der zur Entriegelung der Sperrplatte mit Strom versorgt wird, wobei der Elektromagnet und der Permanentmagnet fahrzeugfest am Schaltgehäuse angeordnet sind und an der Sperrplatte eine Rückholfeder vorgesehen ist, deren Federwirkung die Sperrplatte in Richtung der Verriegelungsposition schwenkt, wenn der Elektromagnet unbestromt ist.

Aus der Patentanmeldung WO 93/24771 ist eine Schaltvorrichtung für ein automatisches Kraftfahrzeuggetriebe zur elektronischen oder mechanischen Anwahl von Schaltstufen mit einem um mindestens eine Schwenkachse schwenkbaren Schalthebel und einem Verriegelungsmechanismus für den Schalthebel gezeigt, wobei der Verriegelungsmechanismus aus einer um eine Kippachse schwenkbaren Sperrplatte besteht, die mit Hilfe einer parallel zum Schalthebel verlaufenden und axial bewegbaren Entriegelungsstange betätigt wird. Weiterhin verfügt die Schaltvorrichtung über eine Kulisse, an der ein Sperrstift, welcher an der Entriegelungsstange befestigt ist, bewegt wird und welcher den Schalthebel in einer Position sperren kann, sobald der Sperrstift in dieser Position in die Kulisse eingreift. Auch verfügt die dort gezeigt Sperrvorrichtung über einen Elektromagneten, der zum Sperren des Schalthebels mit Strom versorgt wird und die Sperrplatte zu sich heranzieht. In der herangezogenen Position blockiert die Sperrplatte die axiale Bewegung der Entriegelungsstange, so dass durch den Sperrstift, der an der Entrieglungsstange angebracht ist und der in eine Aussparung der Kulisse eingreift, eine Bewegung des Schalthebels blockiert.
Der Nachteil dieser Ausführung einer Schaltvorrichtung besteht darin, dass zur Verriegelung, beziehungsweise zum Halten der Verriegelung des Schalthebels, permanent Strom an dem Elektromagneten anliegen muß, um die Sperrplatte anzuziehen. Hierdurch ergeben sich einerseits störende Geräusche und andererseits ein Sicherheitsdefizit, da beim Ausfall der Stromquelle auch der Verriegelungsmechanismus nicht mehr funktionsfähig ist. Außerdem ist der Elektromagnet am Schalthebel befestigt, was nachteilig ist, da dann auch die Stromkabel zur Versorgung des Elektromagneten beweglich sind und die Gefahr von Kabelbrüchen gegeben ist. Auch ist durch die Anbringung des Elektromagneten am Schalthebel die Montage umständlich und es werden große Freiräume für den beweglich angeordneten Magneten notwendig, was zu einer großen Bauweise des Gehäuses führt.

Es ist Aufgabe der Erfindung, eine Schaltvorrichtung für ein Fahrzeuggetriebe mit einem Verriegelungsmechanismus bereitzustellen, der auch im Falle des Ausfalls einer Stromzuführung den Schalthebel sicher verriegelt und die Nachteile des Standes der Technik vermeidet.

Diese Aufgabe wird durch die Merkmale des Anspruches 1 gelöst.

Erfindungsgemäß wird eine Schaltvorrichtung für ein Fahrzeuggetriebe, vorzugsweise ein automatisches Fahrzeuggetriebe zur elektronischen und/oder mechanischen Anwahl der Schaltstufen mit einem um mindestens eine Schwenkachse schwenkbaren Schalthebel und einem Verriegelungsmechanismus für den Schalthebel vorgeschlagen, wobei sowohl ein Permanentmagnet als auch ein Elektromagnet vorgesehen sind und der Permanentmagnet die Sperrplatte in der Verriegelungsposition hält, während der Elektromagnet, wenn er mit Strom versorgt wird, der Wirkung des Permanentmagnetes entgegenwirkt und so für eine Entriegelung der Sperrplatte sorgt. Mit dieser Ausführung bleibt die Verriegelung des Schalthebels auch aktiv, wenn kein Strom für einen Elektromagneten zur Verfügung steht.
Vorteilhaft kann der Elektromagnet und der Permanentmagnet fahrzeugfest, zum Beispiel am Schaltgehäuse angeordnet werden. Hierdurch werden zu große und unnötige Freiräume im Schaltgehäuse und ein beweglicher Kabelbaum zum Elektromagneten vermieden, wodurch sich die Reparaturanfälligkeit wegen Kabelbrüchen reduziert. Außerdem erleichtert diese Anordnung die Montage der Schaltvorrichtung.
Da die Schaltvorrichtung auch mit einer Rückstellfeder ausgerüstet ist, deren Federwirkung die Sperrplatte in Richtung der verriegelten Position schwenkt, wird eine ständige Anlehnung der Sperrplatte an der Entriegelungszunge bewirkt.

Entsprechend der erfindungsgemäßen Lösung weist die Sperrplatte an ihren freien Ende eine Schräge auf, die vorzugsweise 40° bis 70 °, beziehungsweise vorzugsweise 50° bis 60°, beträgt, wobei weiterhin eine Entriegelungszunge vorgesehen ist, die an der Entriegelungstange befestigt ist und die ebenfalls über eine Schräge verfügt, die mit der Schräge der Sperrplatte korrespondiert. Es ist dabei selbstverständlich, dass die Haltekraft des Permanentmagneten und die Schräge von Entriegelungszunge und Sperrplatte so aufeinander abgestimmt sein müssen, dass mit normalen Daumen, beziehungsweise manuellen Betätigungskräften, die Sperrplatte unter Anwendung der entsprechenden Schräge nicht vom Permanentmagneten gelöst werden kann. Erst wenn der Permanentmagnet durch die Bestromung des Elektromagneten in seiner magnetischen Anziehungskraft auf die Sperrplatte reduziert wird, soll die Sperrplatte durch manuelle Betätigungskräfte bis zu 300 N vom Permanentmagneten weggeklappt, also aus ihrer Sperrposition gelöst werden können.

In einer vorteilhaften Ausgestaltung verfügt die Schaltvorrichtung zusätzlich über ein Mittel zur Detektion der Stellung des Schalthebels, wobei vorzugsweise an die Parkstellung des Schalthebels eines Automatikgetriebes gedacht wird. Dieses Mittel kann beispielsweise ein elektrischer oder elektronischer Sensor, ein elektromagnetischer Sensor (zum Beispiel ein Hall-Sensor) oder auch ein optischer Sensor sein, der zum Sperren oder freigeben des Zündschlüssels dient (Key-Lock-Funktion).

In einer anderen Ausführungsform besteht auch die Möglichkeit das Mittel zur Detektion der Stellung des Schalthebels auch als mechanischen Hebel auszustatten, der einen Sperrzug betätigt. Eine weitere Möglichkeit besteht darin, die Stellung des Schalthebels mit Hilfe eines Mikroschalters zu bestimmen. Bei diesen obengenannten Ausführungsformen kann das Mittel zur Detektion der Stellung des Schalthebels beispielsweise mit einem Key-Lock-System verbunden sein und in der vorbestimmten Position des Schalthebels dafür sorgen, daß der Kraftfahrzeugschlüssel aus dem Zündschloß nicht abzuziehen ist. Erfindungsgemäß ist es weiterhin möglich, die Schwenkachse und die Kippachse zueinander parallel anzuordnen. Das bedeutet, daß sich die Sperrplatte in Bewegungsrichtung des Schalthebels schwenken läßt. Bei dieser Variante ist es beispielsweise möglich, daß die Sperrplatte durch die Bewegung des Schalthebels permanent mitbewegt wird. Eine entsprechende Ausführungsform ist im nachfolgenden Ausführungsbeispiel dargestellt und näher beschrieben.

Gemäß einer anderen Variante besteht die Möglichkeit die Kippachse der Sperrplatte senkrecht zur Schwenkachse des Schalthebels anzuordnen, so daß sich die Sperrplatte entlang der Schwenkfläche des Schalthebels erstreckt.

Es versteht sich, daß die vorstehend genannten und nachstehend noch zu erlauternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnungen.

Die Erfindung soll nun anhand des nachfolgenden Ausführungsbeispieles und der Zeichnung näher erläutert werden.

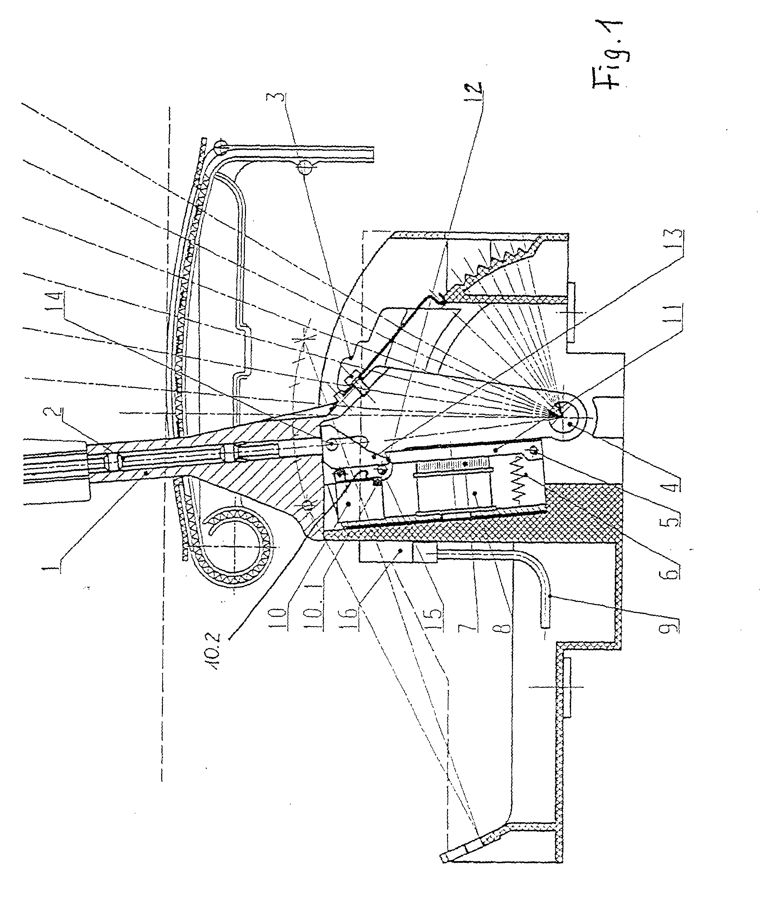

Die Figur 1 zeigt einen Längsschnitt durch eine erfindungsgemäße Schaltvorrichtung mit einem Schalthebel 1, der über eine Schwenkachse 4 schwenkbar gelagert ist. Koaxial im Schalthebel 1 verläuft eine Entriegelungsstange 2, an welcher an der Unterseite ein quer zur Bewegungsebene verlaufender Sperrstift 14 angebracht ist. Der Sperrstift 14 kann sich entlang der Kuvertur der Kulisse 3 bewegen und einzelne Positionen rasten. In der vorderen, hier dargestellten Parkposition des Schalthebels ist der Sperrstift durch die Federwirkung einer Feder an der Entriegelungsstange 2 in eine tiefe Einbuchtung der Kulisse eingefahren und durch die Sperrplatte verriegelt. Eine Bewegung des Schalthebels ist nicht mehr möglich. Am unteren Ende der Entriegelungsstange ist weiterhin eine Entriegelungszunge 13 angebracht, die einerseits die Schaltzunge 10.2 des Mikroschalters 10 bewegt und andererseits mit ihrer eigenen Schräge parallel an der Schräge der Sperrplatte 11 anliegt. Die Sperrplatte 11 ist um eine unten angeordnete Kippachse 5 schwenkbar gelagert und verläuft parallel zu einem am Schaltgehäuse befestigten Permanentmagneten 7. Seitlich vom Permanentmagneten 7 ist ein Elektromagnet 8 angeordnet, so daß der Permamentmagnet 7 zwischen dem Elektromagneten 8 und der Sperrplatte 11 sandwichartig eingeschlossen ist. Sobald der Elektromagnet 8 mit Strom so versorgt wird, daß die magnetische Wirkung des Elektromagneten 8 der des Permanentmagneten 7 entgegenwirkt und diese weitgehend aufhebt, wird die Sperrplatte 11 freigegeben und die Entriegelungsstange 2 kann betätigt werden. Somit fährt der Sperrstift 14 aus der Einbuchtung der Kulisse und gibt den Schalthebel 1 frei. An der Sperrplatte 11 ist weiterhin ein Rückholfeder 6 angebracht, die eine Rückstellkraft für die Sperrplatte 11 und damit eine ständige Anlehnung an die Entriegelungszunge 13 bewirkt.

In der dargestellten Position befindet sich der Schalthebel 1 in einer Parkposition eines automatischen Getriebes. Der Sperrstift 14 ist in einer tiefen Einbuchtung der Kulisse 3 eingefahren und der Permanentmagnet 7 bewirkt ein Festhalten der Sperrplatte 11 am Permanentmagneten Die Kraft des Permanentmagneten und die Schräge der Entriegelungszunge 13 sind so eingestellt, daß es mit normalen Daumenkräften oder sonstigen manuellen Betätigungskräften nicht möglich ist die Entriegelungszunge 13 in axialer Richtung des Schalthebels nach unten zu bewegen und auf diese Weise die Sperrplatte nach rechts zu verschwenken. Damit bei eventuellen kraftvollen Versuchen die Sperrplatte trotz ihrer Verriegelungssituation wegzudrücken keine Schäden an der Entriegelungszunge 13 entstehen, ist auf der Gegenseite der Schräge eine Entlastungsrolle 15 vorgesehen, die den an den Schrägen wirkenden Seitwärtskräften entgegensteht. Wird nun durch eine entsprechende Betätigungssituation im Fahrzeug, zum Beispiel die Betätigung der Fußbremse und/oder Handbremse, ein Schalter betätigt, der über den Kabelbaum 9 und die Steckverbindung 16 mit dem Elektromagneten in Verbindung steht und den Elektromagneten 8 bestromt, so baut sich im Elektromagneten ein magnetisches Feld auf, das dem Permanentmagneten entgegenwirkt und das Magnetfeld des Permanentmagneten neutralisiert. In dieser Situation kann die Sperrplatte 11 durch einfache leichte Daumenkräfte über die Entriegelungsstange 2 gelöst werden, wobei gleichzeitig die Entriegelungsstange 2 nach unten verfährt und die Verriegelung des Sperrstiftes in der Kulisse freigibt. Nach dem Freigeben der Verriegelung des Sperrstiftes ist es nun möglich, den Schalthebel 1 nach rechts zu verschwenken und die einzelnen gewünschten Schaltpositionen des Schalthebels einzunehmen. Gleichzeitig mit der Bewegung der Entriegelungsstange 2 nach unten, wird auch die Schaltzunge 10.2 des Mikroschalters entlastet, so daß sie sich um die Achse 10.1 nach rechts bewegen kann und beispielsweise eine Sperrsituation des Zündschlosses (key-lock) auslösen kann. Wird andererseits der Schalthebel 1 in die Parkposition verfahren und die Entriegelungsstange 2, mit der damit verbundenen Entriegelungszunge 13, nach ober bewegt, so wird wiederum der Mikroschalter 10 betätigt und das Key-Lock-System gibt den Zündschlüssel im Zündschloß wieder frei.

Es ist auch möglich, daß anstelle des Mikroschalters 10 ein mechanischer Schalter oder ein sonstiger elektronischer, optischer oder elektromagnetischer Sensor verwendet wird. Ebenso ist es auch möglich das gleiche System mit Permanentmagneten und Elektromagnet zu modifizieren, so daß die Kippachse 5 der Sperrplatte 11 in der Schnittebene und damit senkrecht zur Schwenkachse 4 des Schalthebels 1 verlauft.

### Bezugszeichenliste:

- 1: Schalthebel
- 2: Entriegelungsstange
- 3: Kulisse
- 4: Schwenkachse
- 5: Kippachse
- 6: Rückholfeder
- 7: Permanentmagnet
- 8: Elektromagnet
- 9: Kabelbaum
- 10: Mikroschalter
- 10.1: Achse
- 10.2: Schaltzunge
- 11: Sperrplatte
- 12: schräge Ebene an der Sperrplatte
- 13: Entriegelungszunge
- 14: Sperrstift
- 15: Entlastungsrolle
- 16: Steckverbindung

## Patentansprüche

1. Schaltvorrichtung für ein Fahrzeuggetriebe, vorzugsweise ein automatisches Fahrzeuggetriebe, zur elektronischen und/oder mechanischen Anwahl der Schaltstufen mit:
- einem um mindestens eine Schwenkachse (4) schwenkbaren Schalthebel (1),
- einem Verriegelungsmechanismus für den Schalthebel (1), wobei der Verriegelungsmechanismus aus einer um eine Kippachse (5) schwenkbaren Sperrplatte (11) besteht, die mit Hilfe einer parallel zum Schalthebel (1) verlaufenden und axial bewegbaren Entriegelungsstange (2) betätigt wird,
- einer Kulisse (3) an der ein Sperrstift (14), welcher an der Entriegelungsstange (2) befestigt ist, bewegt wird, und den Schalthebel (1) in einer Position sperren kann, sobald der Sperrstift (14) in dieser Position in die Kulisse (3) eingreift,
- mindestens einem Permanentmagneten (7), der die Sperrplatte ( 11 ) in der Verriegelungsposition hält,
- mindestens einem, der Haltewirkung des mindestens einen Permanentmagneten (7) entgegenwirkender, Elektromagnet (8), der zur Entriegelung der Sperrplatte ( 11 ) mit Strom versorgt wird, wobei der Elektromagnet und der Permanentmagnet fahrzeugfest, zum Beispiel am Schaltgehäuse angeordnet sind und an der Sperrplatte eine Rückholfeder (6) vorgesehen ist, deren Federwirkung die Sperrplatte ( 11 ) in Richtung der Verriegelungsposition schwenkt,
**dadurch gekennzeichnet, dass**
die Sperrplatte ( 11 ) an ihrem freien Ende eine Schräge von vorzugsweise 40°-70°, bevorzugt 50° - 60°, aufweist, die mit einer Schräge, einer in axialer Richtung zum Schalthebel (1) beweglichen Entriegelungszunge (13), die an der Entriegelungsstange (2) befestigt ist, korrespondiert.

2. Schaltvorrichtung nach Anspruch 1,
**dadurch gekennzeichnet, dass**
zusätzlich ein Mittel (10, 10.1, 10.2) zur Detektion der Stellung des Schalthebels und der Entriegelungsstange (2) in Park-Position vorgesehen ist.

3. Schaltvorrichtung gemäß Anspruch 2,
**dadurch gekennzeichnet, dass**
als Mittel zur Detektion der Stellung des Schalthebels ein elektrischer oder elektronischer Sensor vorgesehen ist.

4. Schaltvorrichtung gemäß Anspruch 2,
**dadurch gekennzeichnet, dass**
als Mittel zur Detektion der Stellung des Schalthebels ein elektromagnetischer Sensor vorgesehen ist.

5. Schaltvorrichtung gemäß Anspruch 2,
**dadurch gekennzeichnet, dass**
als Mittel zur Detektion der Stellung des Schalthebels ein optischer Sensor vorgesehen ist.

6. Schaltvorrichtung gemäß Anspruch 2,
**dadurch gekennzeichnet, dass**
als Mittel zur Detektion der Stellung des Schalthebels ein mechanischer Hebel vorgesehen ist, der einen Sperrzug betätigt.

7. Schaltvorrichtung gemäß Anspruch 2,
**dadurch gekennzeichnet, dass**
das Mittel zur Detektion der Stellung des Schalthebels ein Mikroschalter (10) ist, der in der Park-Position durch den Schalthebel betätigt wird.

8. Schaltvorrichtung gemäß einem der Ansprüche 2 - 7,
**dadurch gekennzeichnet, dass**
das Mittel zur Detektion der Stellung des Schalthebels mit einem Key-Lock-System verbunden ist.

9. Schaltvorrichtung gemäß einem der Ansprüche 2 - 8,
**dadurch gekennzeichnet, dass**
die Schwenkachse (4) und die Kippachse (5) parallel zueinander angeordnet sind.

10. Schaltvorrichtung gemäß einem der Ansprüche 2 - 8,
**dadurch gekennzeichnet, dass**
die Schwenkachse (4) und die Kippachse (5) rechtwinklig zueinander angeordnet sind.

## Claims

1. Gear shift device for a vehicle transmission, preferably an automatic vehicle transmission, for electronic and/or mechanical selection of the shift steps comprising:
- a shift lever (1) pivotable about at least one swivelling axle (4),
- an interlocking mechanism for the shift lever (1), wherein the interlocking mechanism comprises a locking plate (11), which is pivotable about a tilting axle (5) and which is actuated with the aid of an axially movable interlock deactivating rod (2) extending parallel to the shift lever (1),
- a gate (3) at which a locking pin (14), which is fastened to the interlock deactivating rod (2), is moved, and may lock the shift lever (1) in a position as soon as the locking pin (14) engages in said position into the gate (3),
- at least one permanent magnet (7), which holds the locking plate (11) in the interlocking position,
- at least one electromagnet (8), which counteracts the holding action of the at least one permanent magnet (7) and which for deactivating the interlock of the locking plate (11) is supplied with current, wherein the electromagnet and the permanent magnet are disposed in a vehicle-fixed manner, e.g. on the gear shift housing, and there is provided on the locking plate a restoring spring (6), the spring action of which swivels the locking plate (11) in the direction of the interlocking position,
**characterized in that**
the locking plate (11) on its free end has an inclination of preferably 40° - 70°, preferentially 50° - 60°, which corresponds with an inclination, of an interlock deactivating tongue (13) movable in axial direction relative to the shift lever (1), which is fastened to the interlock deactivating rod (2).

2. Gear shift device according to claim 1,
**characterized in that**
a means (10, 10.1, 10.2) of detecting the setting of the shift lever and the interlock deactivating rod (2) in parking position is additionally provided.

3. Gear shift device according to claim 2,
**characterized in that**
as a means of detecting the setting of the shift lever an electric or electronic sensor is provided.

4. Gear shift device according to claim 2,
**characterized in that**
as a means of detecting the setting of the shift lever an electromagnetic sensor is provided.

5. Gear shift device according to claim 2,
**characterized in that**
as a means of detecting the setting of the shift lever an optical sensor is provided.

6. Gear shift device according to claim 2,
**characterized in that**
as a means of detecting the setting of the shift lever a mechanical lever is provided, which actuates a locking wire.

7. Gear shift device according to claim 2,
**characterized in that**
the means of detecting the setting of the shift lever is a microswitch (10), which is actuated in the parking position by the shift lever.

8. Gear shift device according to one of claims 2 - 7,
**characterized in that**
the means of detecting the setting of the shift lever is connected to a key lock system.

9. Gear shift device according to one of claims 2 - 8,
**characterized in that**
the swivelling axle (4) and the tilting axle (5) are disposed parallel to one another.

10. Gear shift device according to one of claims 2 - 8,
**characterized in that**
the swivelling axle (4) and the tilting axle (5) are disposed at right angles to one another.

## Revendications

1. Dispositif de changement de vitesse pour une transmission de véhicule, de préférence une transmission automatique de véhicule, pour la sélection électronique et/ou mécanique des rapports, comportant :
- un levier de changement de vitesse (1) pouvant pivoter autour d'au moins un axe de pivotement (4),
- un mécanisme de verrouillage pour le levier de changement de vitesse (1), le mécanisme de verrouillage étant constitué d'une plaque de blocage (11) pouvant pivoter autour d'un axe de basculement (5), laquelle est actionnée à l'aide d'une tige de déverrouillage (2) s'étendant parallèlement au levier de changement de vitesse (1) et déplaçable axialement,
- une coulisse (3) sur laquelle est déplacé un doigt de blocage (14), qui est fixé à la tige de déverrouillage (2), et peut bloquer le levier de changement de vitesse (1) dans une position dès que le doigt de blocage (14) s'engage dans cette position dans la coulisse (3),
- au moins un aimant permanent (7) qui maintient la plaque de blocage (11) dans la position de verrouillage,
- au moins un électroaimant (8) s'opposant à l'action de maintien du ou des aimants permanents (7), qui est alimenté en courant pour le déverrouillage de la plaque de blocage (11), l'électroaimant et l'aimant permanent étant solidaires du véhicule, disposés par exemple sur le boîtier de changement de vitesse, et sur la plaque de blocage étant prévu un ressort de rappel (6) dont l'effet de ressort fait pivoter la plaque de blocage (11) en direction de la position de verrouillage,
**caractérisé en ce que**
la plaque de blocage (11) présente à son extrémité libre, un chanfrein de préférence de 40° à 70°, de préférence de 50° à 60°, qui correspond à un chanfrein d'une languette de déverrouillage (13) déplaçable dans la direction axiale vers le levier de changement de vitesse (1) et qui est fixée à la tige de déverrouillage (2).

2. Dispositif de changement de vitesse selon la revendication 1,
**caractérisé en ce que**
il est prévu en outre un moyen (10, 10.1, 10.2) pour détecter la position du changement de vitesse et de la tige de déverrouillage (2) en position de stationnement.

3. Dispositif de changement de vitesse selon la revendication 2,
**caractérisé en ce que**
il est prévu comme moyen de détection de la position du levier de changement de vitesse un capteur électrique ou électronique.

4. Dispositif de changement de vitesse selon la revendication 2,
**caractérisé en ce que**
il est prévu comme moyen de détection de la position du levier de vitesse un capteur électromagnétique.

5. Dispositif de changement de vitesse selon la revendication 2,
**caractérisé en ce que**
il est prévu comme moyen de détection de la position du levier de changement de vitesse un capteur optique.

6. Dispositif de changement de vitesse selon la revendication 2,
**caractérisé en ce que**
il est prévu comme moyen de détection de la position du levier de changement de vitesse un levier mécanique qui actionne un câble de blocage.

7. Dispositif de changement de vitesse selon la revendication 2,
**caractérisé en ce que**
le moyen de détection de la position du levier de changement de vitesse est un micro-interrupteur (10) qui en position de stationnement est actionné par le levier de changement de vitesse.

8. Dispositif de changement de vitesse selon l'une des revendications 2 à 7,
**caractérisé en ce que**
le moyen de détection de la position du levier de changement de vitesse est relié à un système keylock.

9. Dispositif de changement de vitesse selon l'une des revendications 2 à 8,
**caractérisé en ce que**
l'axe de pivotement (4) et l'axe de basculement (5) sont disposés parallèlement l'un à l'autre.

10. Dispositif de changement de vitesse selon l'une des revendications 2 à 8,
**caractérisé en ce que**
l'axe de pivotement (4) et l'axe de basculement (5) sont disposés perpendiculairement l'un à l'autre.
